# EUROPEAN PATENT APPLICATION

(11) **EP 3 492 639 A1**
(43) Date of publication of application: **05.06.2019**
(21) Application number: 17833954.5
(22) Date of filing: 29.06.2017
(51) Int. Cl.: D03D 11/00, B32B 5/28, C08J 5/04, B32B 5/02, B32B 5/06, B32B 5/10, B32B 5/26, B32B 7/02, B32B 7/09

(54) **MULTILAYER TEXTILE FOR SANDWICH STRUCTURE, AND SANDWICH STRUCTURE FIBER-REINFORCED COMPOSITE**

(30) Priority: 29.07.2016 JP 2016150175
(71) Applicant: Kabushiki Kaisha Toyota Jidoshokki, Kariya-shi, Aichi 448-8671 (JP)
(72) Inventor: YOSHIKAWA, Genki, Kariya-shi Aichi 448-8671 (JP)
(74) Representative: TBK
(86) International application number: PCT/JP2017/023843
(87) International publication number: WO 2018/020945

(57) **Abstract**

A multilayer textile for a sandwich structure includes skins made of a fiber-reinforced resin and a core that is sandwiched by the skins. Skin portions are each configured by a warp and a weft both made of a reinforcement fiber. A core portion is configured by a warp and a weft both made of a fiber that is insoluble in a matrix resin of the skins and has a smaller specific gravity than the reinforcement fiber. The skin portions and the core portion are integrated by a binding yarn that is insoluble in the matrix resin of the skins.

## Description

### TECHNICAL FIELD

The present invention relates to a multilayer textile for a sandwich structure and a sandwich structure fiber-reinforced composite.

### BACKGROUND ART

A sandwich structure employs a surface made of FRP material and a core material made of plastic foam to compensate for insufficient rigidity of the FRP material. Atypical method of manufacturing the sandwich structure uses wet lay-up and prepreg.

Also, a composite body having a sandwich structure in which a light-weight core material is sandwiched by skin materials (see Patent Document 1) has been proposed. As shown in Fig. 5, a composite body 81, as one such type of composite body, has a sandwich structure in which a core material 82 is sandwiched by skin materials 83. The core material 82 is configured by a plastic foam body. Each of the skin materials 83 is configured by a plain fabric made of carbon fiber. Fibers 84 extend through the skin materials 83 and the core material 82 and are folded back on the outer side of each of the skin materials 83. The skin materials 83 and the core material 82 are thus joined together by the fibers 84. By impregnating each skin material 83 of the composite body 81 with resin and curing the resin, the skin material 83 is provided as an FRP body.

Wet lay-up exhibits low FRP physical properties and its production requires extensive manpower. On the other hand, prepreg exhibits high FRP physical properties but needs high investment costs. The composite body described in Patent Document 1 has high FRP physical properties but requires extensive work to manufacture. First, reinforced materials (skin materials) are manufactured by impregnating plain fabrics of carbon fiber with matrix resin and curing the matrix resin. Then, a core material is sandwiched by the reinforced materials before the core material and the reinforced materials are joined (integrated) together by fiber.

### PRIOR ART DOCUMENT

### Patent Document

Patent Document 1: Japanese Laid-Open Patent Publication No. 2001-246686

### SUMMARY OF THE INVENTION

### Problems that the Invention is to Solve

Accordingly, it is an objective of the present invention to provide a multilayer textile for a sandwich structure and a sandwich structure fiber-reinforced composite that require less work to manufacture than a case in which each skin and a core are formed independently from each other and integrated later.

### Means for Solving the Problems

To achieve the foregoing objective and in accordance with a first aspect of the present invention, a multilayer textile for a sandwich structure is provided that includes skins made of a fiber-reinforced resin and a core that is sandwiched by the skins. Skin portions that are converted into the skins are each configured by a warp and a weft. Each of the warp and the weft of the skin portions is made of a reinforcement fiber. A core portion that is converted into the core is configured by a warp and a weft. Each of the warp and the weft of the core portion is made of a fiber that is insoluble in a matrix resin of the skins and has a smaller specific gravity than the reinforcement fiber. The skin portions and the core portion are integrated by a binding yarn that is insoluble in the matrix resin of the skins.

The "multilayer textile" herein refers to a textile formed by weft layers and warp layers that are integrated by binding yarns. A "non-reinforcement fiber" refers to a fiber that, even when combined with matrix resin, does not have to exert a function of reinforcing the matrix resin but is required only to exert a function of at least maintaining the shape.

To achieve the foregoing objective and in accordance with a second aspect of the present invention, a sandwich structure fiber-reinforced composite is provided that is formed by combining the above-described multilayer textile for a sandwich structure and a matrix resin.

### BRIEF DESCRIPTION OF THE DRAWINGS

Fig. 1A is a cross-sectional view schematically showing a multilayer textile for a sandwich structure according to a first embodiment.
Fig. 1B is a perspective view schematically showing a sandwich structure fiber-reinforced composite according to the first embodiment.
Fig. 2A is a perspective view schematically showing a sandwich structure fiber-reinforced composite according to a second embodiment.
Fig. 2B is a cross-sectional view schematically showing a multilayer textile for a sandwich structure according to the second embodiment.
Figs. 3A, 3B, and 3C are cross-sectional views each schematically showing arrangement of reinforcement fibers that configure a rib-configuring portion of the multilayer textile for a sandwich structure according to the second embodiment.
Fig. 4 is a cross-sectional view schematically showing arrangement of reinforcement fibers that configure a rib-configuring portion of a multilayer textile for a sandwich structure having rib-configuring portions according to another embodiment.
Fig. 5 is a perspective view schematically showing a composite body of a conventional technique.

### MODES FOR CARRYING OUT THE INVENTION

### First Embodiment

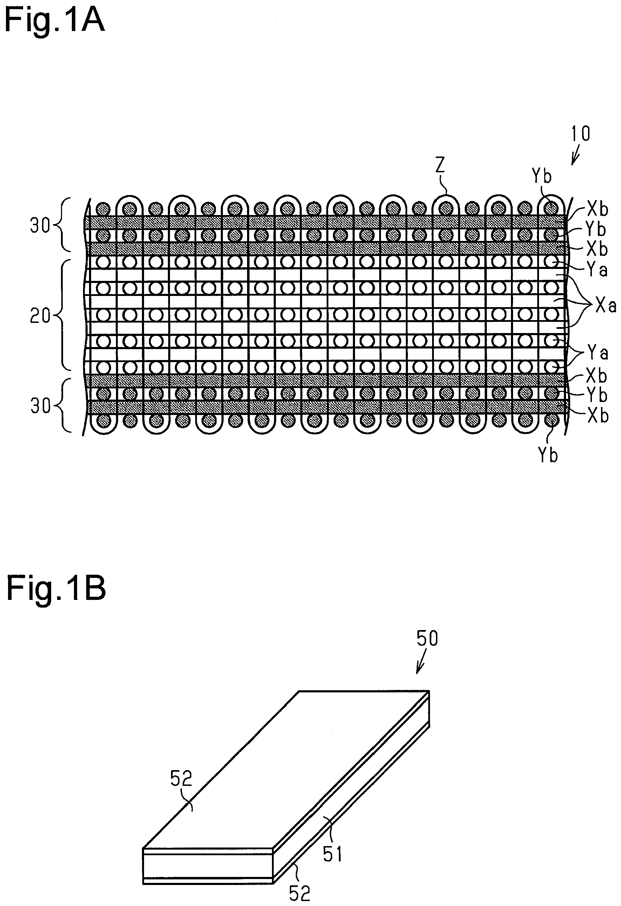

A first embodiment of the present invention will now be described with reference to Fig. 1.

As shown in Fig. 1A, a multilayer textile for a sandwich structure (hereinafter, referred to as the multilayer textile) 10 has skin portions 30 and a core portion 20. The core portion 20 is sandwiched by the skin portions 30. The core portion 20 and the skin portions 30 are impregnated with matrix resin to form a core 51 and skins 52, respectively, of a sandwich structure fiber-reinforced composite (hereinafter, referred to as the composite) 50 shown in Fig. 1B. Epoxy resin as thermosetting resin, for example, is used as the matrix resin. In the multilayer textile 10, the skin portions 30 and the core portion 20 are integrated by binding yarns Z.

Each of the skin portions 30 is configured by wefts Yb and warps Xb. The wefts Yb and the warps Xb are each made of reinforcement fiber and each extend linearly. The wefts Yb extend perpendicular to the warps Xb. In the first embodiment, carbon fiber is used as the reinforcement fiber.

The core portion 20 is configured by wefts Ya and warps Xa. The wefts Ya and the warps Xa are each made of a fiber that is insoluble in matrix resin and has a smaller specific gravity than the reinforcement fiber. The wefts Ya and the warps Xa extend linearly. The wefts Ya extend perpendicular to the warps Xa. Organic fiber is used as the fiber that is insoluble in matrix resin and has a smaller specific gravity than the reinforcement fiber. The organic fiber may be, for example, nylon (PA), polyester, polypropylene (PP), polyphenylene sulfide (PPS), polybutylene terephthalate (PBT), polycarbonate (PC), or polyether ether ketone (PEEK). In the first embodiment, nylon is used as the organic fiber. Nylon has a small specific gravity and exhibits improved bonding performance with epoxy resin as the matrix resin. Nylon is thus preferable as the fiber that is insoluble in matrix resin and has a smaller specific gravity than the reinforcement fiber. That is, the warps Xa and the wefts Ya are made of nylon as non-reinforcement fiber. The non-reinforcement fiber, even when integrated with epoxy resin as the matrix resin, only exerts a function of maintaining a shape but not a function of reinforcing the matrix resin.

The binding yarns Z are employed to maintain the shape of the multilayer textile 10 and configured by non-reinforcement fiber. The binding yarns Z extend through the skin portions 30 and the core portion 20 and are folded back on the outer side of each of the skin portions 30. Although the binding yarns Z may be either reinforcement fiber or non-reinforcement fiber, the binding yarns Z of the first embodiment are made of nylon.

The multilayer textile 10 is formed through multilayer weaving. That is, the necessary number of warps Xa for configuring the core portion 20, the necessary number of warps Xb for configuring the skin portions 30, and the necessary number of binding yarns Z are arranged and, in this state, the wefts Ya, Yb are inserted. At this time, the binding yarns Z are arranged parallel to the warps Xa, Xb. Then, the binding yarns Z are shed such that the binding yarns Z are moved, by means of a heddle, between a position above the uppermost layer of warps Xb and a position below the lowermost layer of warps Xb of the skin portions 30. In this manner, the binding yarns Z configure part of the warps of the multilayer textile and are arranged to extend through the skin portions 30 and the core portion 20 and to be folded back on the outer side of each of the skin portions 30.

By impregnating the multilayer textile 10 with matrix resin and curing the matrix resin, the multilayer textile 10 is converted into a composite 50. The resin impregnation and curing is performed by, for example, the resin transfer molding (RTM) method. Also, by impregnating the multilayer textile 10 with matrix resin and curing the matrix resin, the wefts Ya and the warps Xa of the core portion 20 are combined with the matrix resin to be converted into a core 51. Similarly, the wefts Yb and the warps Xb of each skin portion 30 are combined with the matrix resin to be converted into a skin 52.

With reference to Fig. 1B, the composite 50, which is formed by impregnating the multilayer textile 10 with matrix resin and curing the matrix resin, has a structure in which the core 51 is sandwiched by the skins 52. The composite 50 is used as, for example, the outer plate of mobile units such as aircrafts and passenger cars.

The present embodiment has the following advantages.
(1) The multilayer textile 10 is a multilayer textile for a sandwich structure in which the core 51 is sandwiched by the skins 52 made of fiber-reinforced resin. The skin portions 30, which are converted into the skins 52, are configured by the warps Xb and the wefts Yb each made of reinforcement fiber. The core portion 20, which is converted into the core 51, is configured by the warps Xa and the wefts Ya each made of the fiber that is insoluble in the matrix resin of the skins 52. The fiber has a smaller specific gravity than the reinforcement fiber. The skin portions 30 and the core portion 20 are integrated by the binding yarns Z. The binding yarns Z are insoluble in the matrix resin of the skins 52. The binding yarns Z extend through the skin portions 30 and the core portion 20 and are folded back on the outer side of each skin portion 30. The warps Xa, Xb, the wefts Ya, Yb, and the binding yarns Z are all capable of being combined with the matrix resin that is a component of the fiber-reinforced composite.
   In this configuration, the multilayer textile 10 is manufactured through multilayer weaving by integrating the skin portions 30, which are converted into the skins 52, and the core portion 20, which is converted into the core 51, using the binding yarns Z. Therefore, a sandwich structure is obtained simply by impregnating the multilayer textile 10 with matrix resin and curing the matrix resin. The sandwich structure thus requires less work to manufacture than a case of a manufacturing method in which the skins and the core are formed independently from each other and integrated later.
(2) The binding yarns Z are made of non-reinforcement fiber but not restricted to this. The binding yarns Z may be made of reinforcement fiber. However, any type of binding yarns may be employed as the binding yarns Z as long as the binding yarns Z are capable of maintaining the skin portions 30 and the core portion 20 of the multilayer textile 10 in an integrated state until the formation of the composite 50 is completed by impregnating the multilayer textile 10 with matrix resin and curing the matrix resin. Therefore, reinforcement fiber does not necessarily have to be used for the binding yarns Z. That is, if non-reinforcement fiber is used, a fiber having a smaller diameter than reinforcement fiber can be selected. This increases the content of reinforcement fiber in the composite. Also, if non-reinforcement fiber is used, a fiber having a smaller specific gravity than reinforcement fiber can be employed. Therefore, compared to using reinforcement fiber, the use of non-reinforcement fiber is preferable in terms of reducing the weight of the composite.
(3) Organic fiber does not necessarily have to be used as the fiber that is insoluble in the matrix resin of each skin 52 and has a smaller specific gravity than the reinforcement fiber. However, the organic fiber exhibits high affinity to the matrix resin. Therefore, if the composite 50 is manufactured by impregnating the multilayer textile 10 with the matrix resin and curing the matrix resin, using the organic fiber facilitates improvement of the physical properties of the composite 50.
(4) The composite 50 is formed by combining the multilayer textile 10 with the matrix resin. In this configuration, the composite 50 is formed by arranging the multilayer textile 10 in a mold, impregnating the multilayer textile 10 with the matrix resin, and curing the matrix resin. Specifically, the reinforcement fiber in each skin portion 30 forms a composite with the matrix resin and is thus converted into the skin 52. The fiber in the core portion 20 forms a composite with the matrix resin and is thus converted into the core 51. The composite 50 requires less time to produce than a case in which the skins and the core are formed independently from each other and integrated later.

### Second Embodiment

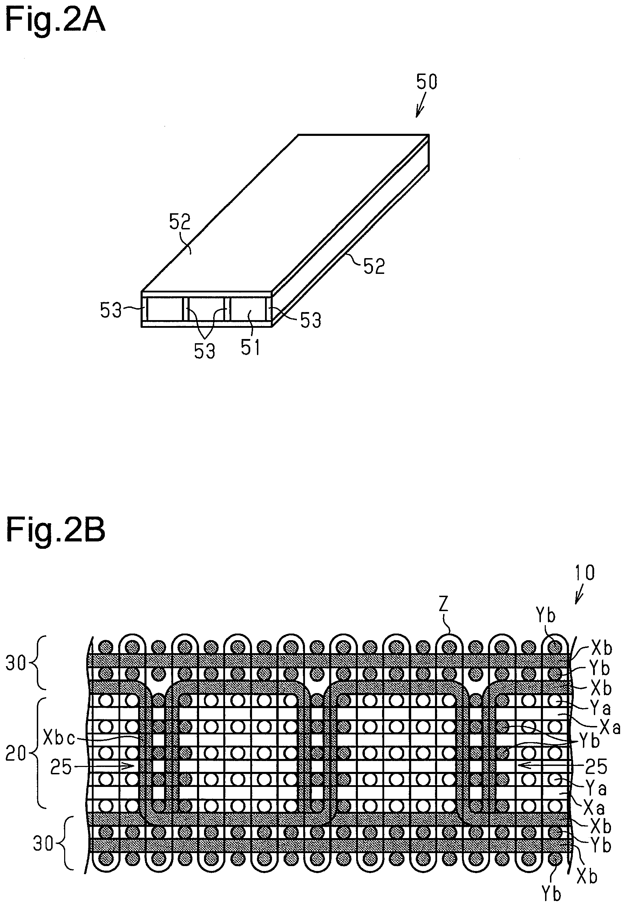

Next, a second embodiment will be described with reference to Fig. 2.

As illustrated in Fig. 2A, a composite 50 of the second embodiment is greatly different from the first embodiment in that the composite 50 has multiple ribs 53 between skins 52 on the opposite sides of the core 51. The components of the second embodiment that are the same as or similar to the corresponding components of the first embodiment are given the reference numerals that are the same as or similar to those of the corresponding components of the first embodiment. The detailed description of these components is omitted herein. Fig. 2A schematically shows the composite 50. Therefore, the number of the ribs 53 or the intervals of the ribs 53 illustrated in the drawing do not necessarily match the number of rib-configuring portions 25 or the intervals of the rib-configuring portions 25 in the multilayer textile 10 shown in Fig. 2B.

With reference to Fig. 2B, in the multilayer textile 10, the skin portions 30 and the core portion 20, which is sandwiched by the skin portions 30, are integrated by the binding yarns Z. The multilayer textile 10 has the rib-configuring portions 25 in part of the core portion 20. If the composite 50 is manufactured by impregnating the multilayer textile 10 with matrix resin and curing the matrix resin, the rib-configuring portions 25 configure the ribs 53 in the composite 50.

As illustrated in Fig. 2B, each of the rib-configuring portions 25 is configured by part of the warps Xp and part of the wefts Yb adjacent to the aforementioned part of the warps Xb. The warps Xp are a component of the skin portion 30 and made of reinforcement fiber. The wefts Yb are arranged in the core portion 20 and made of reinforcement fiber. The rib-configuring portions 25 each extend in the arrangement direction of the wefts Yb, that is, in the same direction as the wefts Yb.

Specifically, the warps Xb, which are a component of each skin portion 30 and made of reinforcement fiber, include those located at positions facing the core portion 20. These warps Xb enter the core portion 20 and then are folded back on the other skin portion 30. The warps Xb thus have parts Xbc that extend in the thickness direction of the multilayer textile 10.

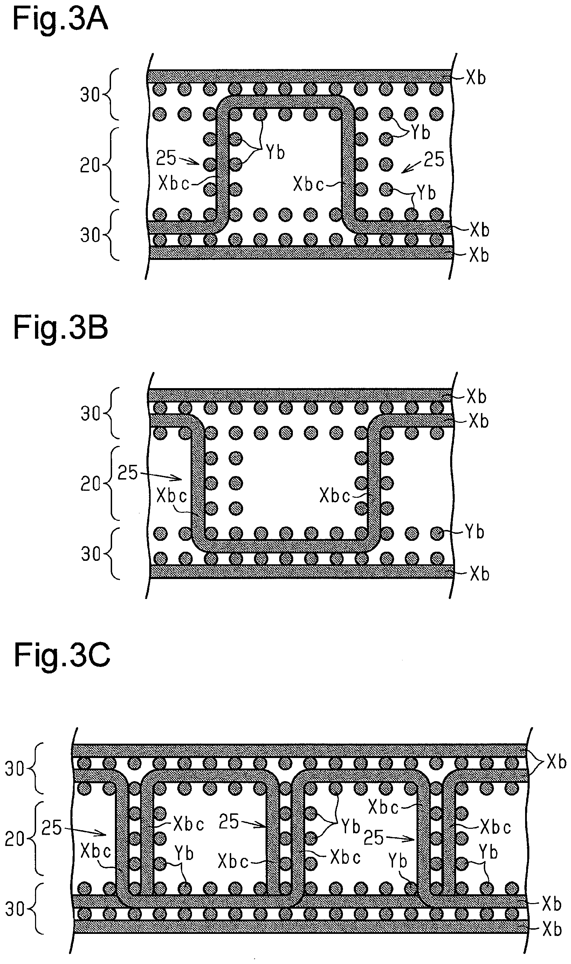

As shown in Figs. 3A and 3B, the parts of the warps Xb that configure the rib-configuring portions 25 include those of the parts Xbc that enter the core portion 20 from the lower one of the skin portions 30. These parts Xbc are each sandwiched by the corresponding wefts Yb, which are made of reinforcement fiber. On the other hand, those of the parts Xbc that enter the core portion 20 from the upper one of the skin portions 30 are each sandwiched by the corresponding wefts Yb, which are made of reinforcement fiber, and the wefts Ya (not shown), which are made of non-reinforcement fiber.

With reference to Fig. 3C, regarding those of the warps Xb that configure the rib-configuring portions 25 and are made of reinforcement fiber, the distance from the point at which each of these warps Xb enters the core portion 20 from the upper skin portion 30 to the point at which the warp Xb re-enters the core portion 20 from the lower skin portion 30 is greater than the distance from the point at which the warp Xb enters the core portion 20 from the lower skin portion 30 to the point at which the warp Xb re-enters the core portion 20 from the upper skin portion 30. In Figs. 3A, 3B, and 3C, the warps Xa and the wefts Ya made of non-reinforcement fiber, those of the wefts Yb on the outer side of each skin portion 30 that are made of reinforcement fiber, and the binding yarns Z are omitted.

The multilayer textile 10 of the second embodiment is formed through multilayer weaving. Specifically, the warps Xb are shed such that those of the warps Xb in each skin portion 30 that face the core portion 20 are moved, by means of a heddle, between a position above the uppermost layer of wefts Ya and a position below the lowermost layer of wefts Ya of the core portion 20, in a manner folding up and down repeatedly at predetermined intervals.

In addition to advantages equivalent to the advantages (1) to (4) of the first embodiment, the second embodiment has the following advantage.
(5) The core portion 20 of the multilayer textile 10 has the rib-configuring portions 25, which are made of reinforcement fiber. In this configuration, if the composite 50 is manufactured by impregnating the multilayer textile 10 with matrix resin and curing the matrix resin, the rib-configuring portions 25 configure the ribs 53 in the composite 50. This improves the bending strength of the composite 50, compared to the composite 50 of the first embodiment, which lacks the ribs 53.

Each of the above-described embodiments may be modified as follows.

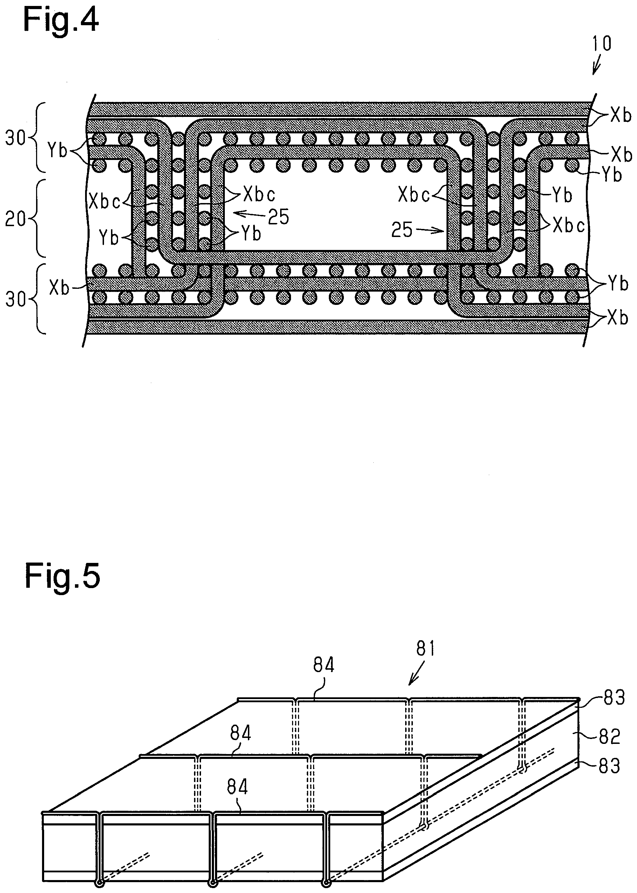

As shown in Fig. 4, each one of the rib-configuring portions 25 of the multilayer textile 10 may be formed by three or more, for example, four, parts Xbc of the warps Xb, which are made of reinforcement fiber. The number of parts Xbc of the warps Xb is set depending on the performance required of the composite 50. As in Fig. 3C, the warps Xa and the wefts Ya, which are made of non-reinforcement fiber, the wefts Yb on the outer side of each skin portion 30, which are made of reinforcement fiber, and the binding yarns Z are omitted in Fig. 4.

The sandwich structure may be configured in any suitable manner as long as the sandwich structure has at least two opposed skin portions 30 made of reinforcement fiber. For example, the core portion 20 that is made of non-reinforcement fiber and sandwiched by skin portions 30 may have a layer of reinforcement fiber.

The warps Xa, Xb and the wefts Ya, Yb are not restricted to having uniform diameters but may have different diameters.

Warps Xa having different diameters and/or warps Xb having different diameters may be employed.

Wefts Ya having different diameters and/or wefts Yb having different diameters may be employed.

The multilayer textile 10 may be a three-dimensional textile. The three-dimensional textile refers to a textile formed by stacking multiple fibrous layers formed by warps and wefts and, in this state, binding the layers by binding yarns. Also in this case, a sandwich structure is obtained simply by impregnating the three-dimensional textile, which is for a sandwich structure, with matrix resin and curing the matrix resin.

In both the multilayer textile and the three-dimensional textile, the binding yarns do not necessarily have to be inserted between all adjacent ones of the wefts. The insertion intervals of the binding yarns may be changed as needed depending on the performance required of the multilayer textile or the three-dimensional textile.

Any non-reinforcement fiber may be employed for the core portion 20 as long as the non-reinforcement fiber has a smaller specific gravity than the reinforcement fiber in each skin portion 30. The non-reinforcement fiber in the core portion 20 is thus not restricted to organic fiber.

The wefts Yb and the warps Xb in each skin portion 30 that are made of reinforcement fiber do not necessarily have to be made of carbon fiber but may be made of, for example, glass fiber or ceramic fiber.

The matrix resin, which is used to manufacture the composite 50 with the multilayer textile 10, is not restricted to epoxy resin but may be any other suitable type of thermosetting resin, such as unsaturated polyester resin or vinyl ester resin. Also, the matrix resin is not restricted to thermosetting resin but may be thermoplastic resin.

Reinforcement fiber may be used for the binding yarns Z. Alternatively, some of multiple binding yarns Z may be made of reinforcement fiber and the rest may be made of non-reinforcement fiber.

The number of rib-configuring portions 25 in the multilayer textile 10 and the number of ribs 53 in the composite 50 may be set as needed depending on the performance required of the composite 50.

Each of the skin portions 30 may be configured such that the wefts Yb and the warps Xb are arranged to have an outermost layer of warps Xb, instead of wefts Yb. Alternatively, one of the skin portions 30 may be configured to have an outermost layer of wefts Yb while the other one of the skin portions 30 is configured to have an outermost layer of warps Xb.

In the multilayer textile 10, the positions of the wefts Ya may be switched with the positions of the warps Xa and the positions of the wefts Yb may be switched with the positions of the warps Xb.

The binding yarns Z do not necessarily have to extend through the skin portions 30 and the core portion 20 or be folded back on the outer side of each skin portion 30. That is, internal binding yarns and external binding yarns may be employed for separate purposes. The internal binding yarns integrate the layers that configure the skin portions 30 and the layer that configures the core portion 20. The external binding yarns integrate the skin portions 30 with the core portion 20.

## Claims

1. A multilayer textile for a sandwich structure, comprising skins made of a fiber-reinforced resin and a core that is sandwiched by the skins, wherein
skin portions that are converted into the skins are each configured by a warp and a weft, each of the warp and the weft of the skin portions being made of a reinforcement fiber,
a core portion that is converted into the core is configured by a warp and a weft, each of the warp and the weft of the core portion being made of a fiber that is insoluble in a matrix resin of the skins and has a smaller specific gravity than the reinforcement fiber, and
the skin portions and the core portion are integrated by a binding yarn that is insoluble in the matrix resin of the skins.

2. The multilayer textile according to claim 1, wherein the binding yarn is configured by a non-reinforcement fiber.

3. The multilayer textile according to claim 1 or 2, wherein the core portion has a rib-configuring portion made of a reinforcement fiber.

4. The multilayer textile according to any one of claims 1 to 3, wherein the fiber that is insoluble in the matrix resin of the fiber-reinforced resin and has a smaller specific gravity than the reinforcement fiber is an organic fiber.

5. A sandwich structure fiber-reinforced composite formed by combining the multilayer textile for a sandwich structure according to any one of claims 1 to 4 and a matrix resin.
